# EUROPEAN PATENT SPECIFICATION

(11) **EP 2 942 880 B1**
(45) Date of publication and mention of the grant of the patent: **30.12.2020**
(21) Application number: 13880734.2
(22) Date of filing: 03.04.2013
(51) Int. Cl.: H04B 7/06

(54) **METHODS AND DEVICES FOR REPORTING AND RECEIVING CHANNEL STATE INFORMATION**
VERFAHREN UND VORRICHTUNGEN ZUM MELDEN UND EMPFANGEN VON KANALSTATUSINFORMATIONEN
PROCÉDÉS ET DISPOSITIFS POUR RAPPORTER ET RECEVOIR DES INFORMATIONS D'ÉTAT DE CANAL

(43) Date of publication of application: 11.11.2015
(60) Divisional application: 20155179.3 / 3 748 865
(73) Proprietor: Huawei Technologies Co., Ltd., Longgang District Shenzhen, Guangdong 518129 (CN)
(72) Inventor: WANG, Jianguo, Shenzhen Guangdong 518129 (CN); ZHOU, Yongxing, Shenzhen Guangdong 518129 (CN)
(74) Representative: Pfenning, Meinig & Partner mbB
(86) International application number: PCT/CN2013/073691
(87) International publication number: WO 2014/161166

(56) References cited:
- WO-A1-2013/034109
- WO-A2-2012/002767
- CN-A- 101 771 444
- CN-A- 102 075 274
- CN-A- 102 932 112
- US-A1- 2010 045 494
- US-A1- 2012 219 042
- US-A1- 2012 322 492

## Description

### TECHNICAL FIELD

Embodiments of the present invention relate to communications technologies, and in particular, to a method for reporting and receiving channel state information, and a device.

### BACKGROUND

A multiple input multiple output (MIMO) system can obtain diversity and array gains by means of transmit precoding and receive signal combination. In a MIMO system that uses precoding, a received signal may be expressed as: **y = HVs + n**, where y is a received signal vector, H is a channel matrix, V is a precoding matrix, s is a transmitted symbol vector, and n is an interference and noise vector. To implement optimal precoding, a transmitter needs to fully learn channel state information (CSI). In an existing Long Term Evolution (LTE) R8-R11 system, the CSI includes a rank indicator (RI), a precoding matrix indicator (PMI), a channel quality indicator (CQI), and the like, where the RI and the PMI respectively indicate a quantity of used layers and a used precoding matrix. Generally, a set of used precoding matrices is referred to as a codebook, and each precoding matrix is a code word in the codebook. Codebooks in the existing LTE R8-R11 system are all designed based on an antenna of a conventional base station. The antenna of the conventional base station has a fixed or a remote electrical downtilt, and an antenna beam of the conventional base station can be dynamically adjusted only in a horizontal direction by means of precoding or beam forming.

To further improve spectral efficiency, it is considered introducing more antenna configurations, particularly, an antenna configuration based on an active antenna system (AAS), into an LTE R12 system. On one hand, unlike the conventional base station, an AAS base station further provides a degree of freedom of an antenna in a vertical direction, which is implemented mainly by using a two-dimensional antenna array in the horizontal and vertical directions of the AAS base station. On the other hand, for the AAS base station, more antenna ports may be considered, for example, a quantity of antenna ports currently considered may be 8, 16, 32, or 64. In addition, even if there is a same quantity of antenna ports, an antenna array structure may be different; therefore, for an antenna port with a same serial number, different channel state measurements may be obtained in different array structures. In this case, CSI reporting or feedback is required to automatically adapt to an antenna array structure. It should be particularly noted that, during design of a new LTE R12 system, backward compatibility is also an important consideration, for example, it is required that an LTE R12 system equipped with an AAS base station can ensure that legacy user equipment (UE) of the LTE R8-R11 can work normally or performance of the legacy user equipment of the LTE R8-R11 does not degrade. However, in the prior art, antenna port configuration information and a method for reporting CSI especially an existing structure of the precoding matrix cannot automatically adapt to a requirement of antenna configuration of the AAS base station. Therefore, it is required to provide a CSI reporting solution that is applicable to an AAS base station scenario, so as to improve precision of CSI feedback, and fully use an advantage that the AAS base station increases a system capacity and improve coverage by using degrees of freedom in horizontal and vertical directions.

US 2012/0322492A discloses that the user equipment may estimate a channel per one or more effective antennas for the user equipment on the basis of the effective antenna information, generate channel quality information (channel status information) for the estimated channel, and feed the generated channel quality information back to the base station. A precoding matrix index (PMI) may be used as the channel quality information.

WO 2012/002767A discloses a method of configuring a codebook for 8Tx antennas by combination of 2 base matrixes using an inner product.

US 20120/045494A discloses that the terminal includes a rotation matrix generator to generate rotation matrices corresponding to a cross polarization discrimination value (XPD) of a transmission signal and a codebook generator to generate a codebook including result matrices that are generated based on pre-stored block diagonal matrices and the rotation matrices.

US 2012/219042A discloses a method of mapping data in a wireless communication system. The method includes forming a first frame having plural positions at a first transmitter. The first frame has a first plurality of reference signals. A second frame having plural positions corresponding to the plural positions of the first frame is formed at a second transmitter remote from the first transmitter.

EP 2755417 A1 (WO 2013/034109 A1) discloses that a connection reconfiguration request sent by the eNodeB to the UE can include an AAS characteristic parameter of the eNodeB, the AAS characteristic parameter can be contained in the antenna information (Antenna Info) of the connection reconfiguration request; the AAS characteristic parameter may include horizontal antenna Ports Count and vertical antenna Ports Count.

### SUMMARY

Embodiments of the present invention provide a method for reporting and receiving channel state information and a device, as defined in the presently independent claims, so as to resolve a problem of reporting CSI in an AAS base station scenario, and improve precision of CSI reporting or feedback.

While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

According to a first aspect, a method for reporting channel state information is provided, including:
acquiring reference signal resource configuration information, where the reference signal resource configuration information includes antenna port configuration information, and the antenna port configuration information is used to indicate an antenna port structure;
receiving, according to the reference signal resource configuration information, a reference signal sent by a base station;
selecting a precoding matrix from a codebook based on the received reference signal, where a structure of the precoding matrix corresponds to the antenna port structure indicated by the antenna port configuration information; and
reporting a precoding matrix indicator PMI to the base station, where the PMI is used to indicate the selected precoding matrix.

With reference to the first aspect, in a first possible implementation manner of the first aspect, the antenna port configuration information includes an index m and an index n, where the index m corresponds to a quantity of rows in the antenna port structure, and the index n corresponds to a quantity of columns in the antenna port structure.

With reference to the first possible implementation manner of the first aspect, in a second possible implementation manner of the first aspect, the structure of the precoding matrix is **W = W**₁**W**₂, where ${W}_{1} = \left[\begin{matrix}X & 0 \\ 0 & X\end{matrix}\right] ,$ and **X = A** ⊗ **B** ; ⊗ indicates a Kronecker product; A and B are matrices of m×p and (n/2)×q respectively, or A and B are matrices of (m/2)×p and n×q respectively; **W**₂ is a matrix of (pq)×*r*, where p and q are positive integers, and r is a rank of the precoding matrix.

With reference to the first possible implementation manner of the first aspect, in a third possible implementation manner of the first aspect, the structure of the precoding matrix is **W = W₁W₂**, where

**W₁ = A** ⊗ **B**; ⊗ indicates a Kronecker product; A and B are matrices of m×p and n×q respectively, or A and B are matrices of n×p and m×q respectively; **W**₂ is a matrix of (pq)×*r*, where p and q are positive integers, and r is a rank of the precoding matrix.

With reference to the second possible implementation manner of the first aspect or the third possible implementation manner of the first aspect, in a fourth possible implementation manner of the first aspect, the PMI includes a first PMI used to indicate the matrix **W**₁ and a second PMI used to indicated the matrix **W**₂; where
the reporting a precoding matrix indicator PMI to the base station includes:
separately reporting the first PMI and the second PMI to the base station.

According to a second aspect, a method for receiving channel state information is provided, including:
sending a reference signal to user equipment, where the user equipment receives the reference signal based on pre-acquired reference signal resource configuration information, the reference signal resource configuration information includes antenna port configuration information, and the antenna port configuration information is used to indicate an antenna port structure; and
receiving a precoding matrix indicator PMI reported by the user equipment, where the PMI is used to indicate a precoding matrix selected by the user equipment, the precoding matrix is selected by the user equipment from a codebook based on the reference signal, and a structure of the precoding matrix corresponds to the antenna port structure indicated by the antenna port configuration information.

With reference to the second aspect, in a first possible implementation manner of the second aspect, the antenna port configuration information includes an index m and an index n, where the index m corresponds to a quantity of rows in the antenna port structure, and the index n corresponds to a quantity of columns in the antenna port structure.

With reference to the first possible implementation manner of the second aspect, in a second possible implementation manner of the second aspect, the structure of the precoding matrix is **W = W**₁**W**₂, where ${W}_{1} = \left[\begin{matrix}X & 0 \\ 0 & X\end{matrix}\right] ,$ and **X** = **A** ⊗ **B**; ⊗ indicates a Kronecker product; A and B are matrices of m×p and (n/2)×q respectively, or A and B are matrices of (m/2)×p and n×q respectively; **W**₂ is a matrix of (pq)×*r*, where p and q are positive integers, and r is a rank of the precoding matrix.

With reference to the first possible implementation manner of the second aspect, in a third possible implementation manner of the second aspect, the structure of the precoding matrix is **W = W**₁**W**₂, where
**W**₁ = **A** ⊗ **B**; ⊗ indicates a Kronecker product; A and B are matrices of m×p and n×q respectively, or A and B are matrices of n×p and m×q respectively; **W**₂ is a matrix of (pq)×*r*, where p and q are positive integers, and r is a rank of the precoding matrix.

With reference to the second possible implementation manner of the second aspect or the third possible implementation manner of the second aspect, in a fourth possible implementation manner of the second aspect, the PMI includes a first PMI used to indicate the matrix **W**₁ and a second matrix used to indicated the matrix **W**₂; where
the receiving a precoding matrix indicator PMI reported by the user equipment includes:
separately receiving the first PMI and the second PMI that are reported by the user equipment.

According to a third aspect, user equipment is provided, including:
an acquiring module, configured to acquire reference signal resource configuration information, where the reference signal resource configuration information includes antenna port configuration information, and the antenna port configuration information is used to indicate an antenna port structure;
a receiving module, configured to receive, according to the reference signal resource configuration information acquired by the acquiring module, a reference signal sent by a base station;
a selecting module, configured to select a precoding matrix from a codebook based on the reference signal received by the receiving module, where a structure of the precoding matrix corresponds to the antenna port structure indicated by the antenna port configuration information; and
a sending module, configured to report a precoding matrix indicator PMI to the base station, where the PMI is used to indicate the precoding matrix selected by the selecting module.

With reference to the third aspect, in a first possible implementation manner of the third aspect, the antenna port configuration information includes an index m and an index n, where the index m corresponds to a quantity of rows in the antenna port structure, and the index n corresponds to a quantity of columns in the antenna port structure. With reference to the first possible implementation manner of the third aspect, in a second possible implementation manner of the third aspect, the structure of the precoding matrix is **W** = **W**₁**W**₂, where ${W}_{1} = \left[\begin{matrix}X & 0 \\ 0 & X\end{matrix}\right] ,$ and **X = A** ⊗ **B**; ⊗ indicates a Kronecker product; A and B are matrices of m×p and (n/2)×q respectively, or A and B are matrices of (m/2)×p and n×q respectively; **W**₂ is a matrix of (pq)×*r*, where p and q are positive integers, and r is a rank of the precoding matrix.

With reference to the first possible implementation manner of the third aspect, in a third possible implementation manner of the third aspect, the structure of the precoding matrix is **W** = **W**₁**W**₂, where

**W**₁ = **A** ⊗ **B**; ⊗ indicates a Kronecker product; A and B are matrices of m×p and n×q respectively, or A and B are matrices of n×p and m×q respectively;

**W**₂ is a matrix of (pq)×*r*, where p and q are positive integers, and r is a rank of the precoding matrix.

With reference to the second possible implementation manner of the third aspect or the third possible implementation manner of the third aspect, in a fourth possible implementation manner of the third aspect, the PMI includes a first PMI used to indicate the matrix **W**₁ and a second matrix used to indicated the matrix **W**₂; where
the sending module is specifically configured to separately report the first PMI and the second PMI to the base station.

According to a fourth aspect, a base station is provided, including:
a sending module, configured to send a reference signal to user equipment, where the user equipment receives the reference signal based on pre-acquired reference signal resource configuration information, the reference signal resource configuration information includes antenna port configuration information, and the antenna port configuration information is used to indicate an antenna port structure; and
a receiving module, configured to receive a precoding matrix indicator PMI reported by the user equipment, where the PMI is used to indicate a precoding matrix selected by the user equipment, the precoding matrix is selected by the user equipment from a codebook based on the reference signal, and a structure of the precoding matrix corresponds to the antenna port structure indicated by the antenna port configuration information.

With reference to the fourth aspect, in a first possible implementation manner of the fourth aspect, the antenna port configuration information includes an index m and an index n, where the index m corresponds to a quantity of rows in the antenna port structure, and the index n corresponds to a quantity of columns in the antenna port structure.

With reference to the first possible implementation manner of the fourth aspect, in a second possible implementation manner of the fourth aspect, the structure of the precoding matrix is **W** = **W**₁**W**₂, where ${W}_{1} = \left[\begin{matrix}X & 0 \\ 0 & X\end{matrix}\right] ,$ and **X** = **A** ⊗ **B**; ⊗ indicates a Kronecker product; A and B are matrices of m×p and (n/2)×q respectively, or A and B are matrices of (m/2)×p and n×q respectively; **W**₂ is a matrix of (pq)×*r*, where p and q are positive integers, and r is a rank of the precoding matrix.

With reference to the first possible implementation manner of the fourth aspect, in a third possible implementation manner of the fourth aspect, the structure of the precoding matrix is **W =** W₁**W**₂, where

**W**₁ = A ⊗ B; ⊗ indicates a Kronecker product; A and B are matrices of m×p and n×q respectively, or A and B are matrices of n×p and m×q respectively;

**W**₂ is a matrix of (pq)×*r*, where p and q are positive integers, and r is a rank of the precoding matrix.

With reference to the second possible implementation manner of the fourth aspect or the third possible implementation manner of the fourth aspect, in a fourth possible implementation manner of the fourth aspect, the PMI includes a first PMI used to indicate the matrix **W**₁ and a second PMI used to indicated the matrix **W**₂; where
the receiving module is specifically configured to separately receive the first PMI and the second PMI that are reported by the user equipment.

According to a fifth aspect, user equipment is provided, including: a processor, a receiver, and a transmitter, where
the processor is configured to acquire reference signal resource configuration information, where the reference signal resource configuration information includes antenna port configuration information, and the antenna port configuration information is used to indicate an antenna port structure; and configured to select a precoding matrix from a codebook based on a reference signal received by the receiver, where a structure of the precoding matrix corresponds to the antenna port structure indicated by the antenna port configuration information;
the receiver is configured to receive, according to the reference signal resource configuration information acquired by the processor, the reference signal sent by a base station; and
the transmitter is configured to report a precoding matrix indicator PMI to the base station, where the PMI is used to indicate the precoding matrix selected by the processor.

According to a sixth aspect, a base station is provided, including:
a transmitter, configured to send a reference signal to user equipment, where the user equipment receives the reference signal based on pre-acquired reference signal resource configuration information, the reference signal resource configuration information includes antenna port configuration information, and the antenna port configuration information is used to indicate an antenna port structure; and
a receiver, configured to receive a precoding matrix indicator PMI reported by the user equipment, where the PMI is used to indicate a precoding matrix selected by the user equipment, the precoding matrix is selected by the user equipment from a codebook based on the reference signal, and a structure of the precoding matrix corresponds to the antenna port structure indicated by the antenna port configuration information

According to the method for reporting and receiving channel state information and the user equipment provided in the embodiments of the present invention, reference signal resource configuration information that includes antenna port configuration information is acquired, a reference signal sent by a base station is received according to the reference signal resource configuration information, a precoding matrix is selected from a codebook based on the received reference signal, and a PMI used to indicate the selected precoding matrix is reported to the base station, where the antenna port configuration information indicates an antenna port structure, and a structure of the precoding matrix corresponds to the antenna port structure. In the embodiments of the present invention, more information about the antenna port structure is provided, and the structure of the precoding matrix corresponds to the antenna port structure indicated by the antenna port configuration information. This feature ensures that, in a process of CSI measurement and reporting, degrees of freedom in a horizontal direction and a vertical direction of an antenna of the AAS base station are both considered, so that precision of CSI reporting or feedback can be improved. The method and the user equipment are applicable to a scenario in which an antenna of an AAS base station is deployed, and resolve a problem of CSI reporting in an AAS base station scenario.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1a is a flowchart of a method for reporting channel state information according to an embodiment of the present invention;
FIG. 1b is a flowchart of a method for receiving channel state information according to an embodiment of the present invention;
FIG. 2a to FIG. 2c are schematic structural diagrams of uniform linear arrays according to an embodiment of the present invention;
FIG. 3a to FIG. 3c are schematic structural diagrams of cross polarization antenna arrays according to an embodiment of the present invention;
FIG. 4 is a schematic structural diagram of a UE according to an embodiment of the present invention;
FIG. 5 is a schematic structural diagram of another UE according to an embodiment of the present invention;
FIG. 6 is a schematic structural diagram of a base station according to an embodiment of the present invention; and
FIG. 7 is a schematic structural diagram of another base station according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

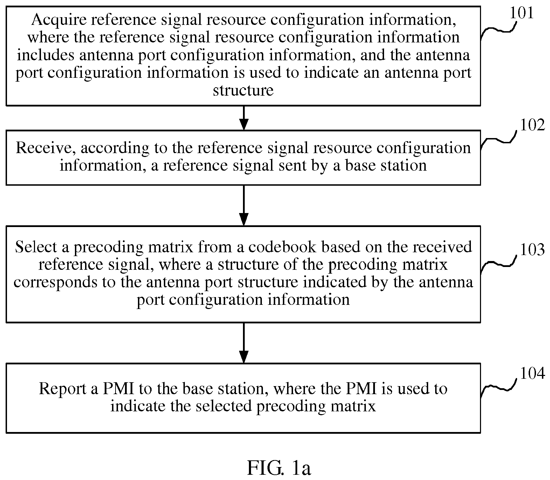

FIG. 1a is a flowchart of a method for reporting channel state information according to an embodiment of the present invention. As shown in FIG. 1a, the method includes the following steps:
101. Acquire reference signal resource configuration information, where the reference signal resource configuration information includes antenna port configuration information, and the antenna port configuration information is used to indicate an antenna port structure.
102. Receive, according to the reference signal resource configuration information, a reference signal sent by a base station.

In this embodiment, to receive the reference signal sent by the base station, a UE first acquires the reference signal resource configuration information, and then receives, based on the reference signal resource configuration information, the reference signal sent by the base station.

In this embodiment, in addition to the antenna port configuration information, the reference signal resource configuration information further includes a subframe configuration (for example, a subframe period and a subframe offset of the reference signal) corresponding to the reference signal, a resource element (RE) occupied by the reference signal, and the like. The UE specifically receives, on a subframe and the resource element that are indicated by the reference signal resource configuration information, the reference signal sent by the base station. It is noted herein that a quantity of reference signals is the same as a quantity of antenna ports, where the quantity of antenna ports is indicated by the antenna port configuration information. In this embodiment, the antenna port structure indicated by the antenna port configuration information provides more antenna port information in addition to the quantity of antenna ports.

In an optional implementation manner of this embodiment, a manner of acquiring the reference signal resource configuration information includes that: the UE receives the reference signal resource configuration information sent by the base station by using higher layer signaling or dynamic signaling. The higher layer signaling may be radio resource control (RRC) signaling or Media Access Control (MAC) layer signaling, which, however, is not limited thereto. The dynamic signaling may be downlink control information (DCI) that is sent by using a physical downlink control channel (PDCCH) or an enhanced PDCCH (ePDCCH), which, however, is not limited thereto.

In another optional implementation manner of this embodiment, a manner for acquiring the reference signal resource configuration information includes that: the UE obtains, according to a cell identify (ID) of a cell in which the UE is located, the reference signal resource configuration information. For example, the UE may obtain, by receiving a broadcast or multicast message, a reference signal resource configuration corresponding to each cell ID, and then obtains, based on the cell ID, the reference signal resource configuration information corresponding to the cell ID.

103. Select a precoding matrix from a codebook based on the received reference signal, where a structure of the precoding matrix corresponds to the antenna port structure indicated by the antenna port configuration information.

Specifically, the selecting a precoding matrix from a codebook based on the received reference signal includes:
performing channel estimation based on the received reference signal, for example, obtaining a channel estimation value from the received reference signal by using a least square method or a minimum mean square error criterion; and
selecting, by using the obtained channel estimation value, precoding from the codebook based on a predefined criterion, for example, a capacity, a throughput, or a maximum mutual information criterion. Selecting the precoding matrix by using channel estimation and the predefined criterion is a conventional technology, and details are not described herein.

In this embodiment, the structure of the precoding matrix corresponds to the antenna port structure indicated by the antenna port configuration information. That is, the structure of the precoding matrix not only relates to the quantity of antenna ports, but also relates to the antenna port structure. If the quantity of antenna ports is the same, but antenna port structures are different, corresponding structures of a precoding matrix are different. That the structure of the precoding matrix corresponds to the antenna port structure indicated by the antenna port configuration information may be that the structure of the precoding matrix corresponds to an antenna port configuration, thereby corresponding to the antenna port structure indicated by the antenna port configuration. It can be learned that the structure of the precoding matrix in this embodiment can automatically adapt to the antenna port structure, thereby improving precision of CSI feedback or reporting.

104. Report a PMI to the base station, where the PMI is used to indicate the selected precoding matrix.

After selecting the precoding matrix from the codebook, to facilitate implementation of a transmit precoding technology, the UE reports, to the base station, the PMI used to indicate the selected precoding matrix.

It is noted herein that in step 104, to the UE may report, to the base station, the PMI used to indicate the selected precoding matrix, and the UE may further report other CSI information to the base station, for example, RI and/ or CQI.

In an optional implementation manner of this embodiment, a manner of reporting the CSI that includes the PMI to the base station includes that: the UE reports, by using a physical uplink control channel (PUCCH) or a physical uplink shared channel (PUSCH), the CSI that includes the PMI to the base station, which, however, is not limited thereto.

It is noted herein that, in addition to the foregoing steps, the UE may further receive a data signal sent by the base station, where the data signal is sent by the base station after the base station obtains the precoding matrix according to the PMI reported by the UE and performs precoding on the data, for example, the data signal is sent to the UE by using the PDSCH after being precoded.

The base station receives the PMI and obtains, from the codebook, the precoding matrix selected by the UE. Because the structure of the precoding matrix can automatically adapt to the antenna port structure, precision of CSI feedback or reporting is improved. The base station performs precoding on data by using the precoding matrix, and sends the precoded data to the UE, which can improve a capacity and reliability of data transmission, thereby increasing a throughput and coverage of a system. In addition, the precoding matrix that automatically adapts to different antenna port structures may form different codebooks, so that the PMI can be reported or fed back based on the foregoing antenna port configuration information for only the antenna port structure indicated by the antenna port configuration information, thereby effectively reducing an overhead of CSI reporting or feedback. In contrast, if the UE is notified of only the quantity of antenna ports, because there may be multiple antenna port structures for a same quantity of antenna ports, the precoding matrix included in the codebook may be a union set of precoding matrices of multiple antenna ports or array structures, and this mixed design leads to a larger codebook, thereby causing an excessively large overhead.

It should be noted that the antenna port structure may be an antenna array structure.

In a scenario in which an AAS base station is deployed, because degrees of freedom in a vertical direction and a horizontal direction of an antenna are both considered, an antenna array structure has more changes, and a corresponding antenna port structure also has more changes accordingly. Even if a quantity of antenna ports is the same, antenna array structures may be different; therefore, for an antenna port with a same serial number, different channel state measurements may be obtained in different array structures. However, in the method provided in this embodiment, a precoding matrix corresponding to an antenna port structure is acquired, and a PMI used to indicate the selected precoding matrix is reported to a base station, so that the selected precoding matrix can automatically adapt to an antenna array structure or the antenna port structure, thereby improving precision of CSI reporting or feedback, reducing an overhead of the CSI reporting and feedback, increasing a capacity or a throughput of data transmission, and increasing a capacity and coverage of a system. The method is applicable to the scenario in which an AAS base station is deployed, and resolves a problem of CSI reporting in the AAS base station scenario.

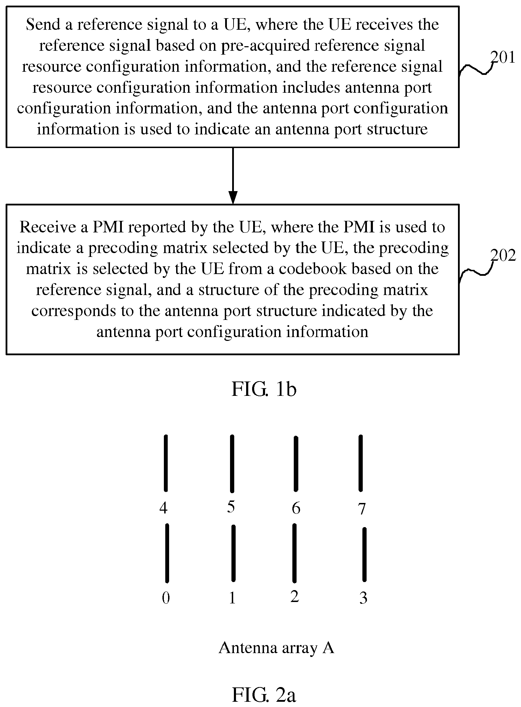

FIG. 1b is a flowchart of a method for receiving channel state information according to an embodiment of the present invention. As shown in FIG. 1b, the method includes the following steps:
201. Send a reference signal to a UE, where the UE receives the reference signal based on pre-acquired reference signal resource configuration information, the reference signal resource configuration information includes antenna port configuration information, and the antenna port configuration information is used to indicate an antenna port structure.

In this embodiment, to receive the reference signal sent by a base station, the UE first acquires the reference signal resource configuration information, and then receives, based on the reference signal resource configuration information, the reference signal sent by the base station. It is noted herein that a quantity of reference signals sent by the base station is the same as a quantity of antenna ports, where the quantity of antenna ports is indicated by the antenna port configuration information.

In this embodiment, in addition to the antenna port configuration information, the reference signal resource configuration information further includes an RE occupied by the reference signal, a subframe configuration, for example, a subframe period and a subframe offset of the reference signal, that corresponds to the reference signal, and the like. The UE specifically receives, on a subframe and the resource element that are indicated by the reference signal resource configuration information, the reference signal sent by the base station.

In an optional implementation manner, before sending the reference signal to the UE, the base station sends the reference signal resource configuration information to the UE by using higher layer signaling or dynamic signaling. The higher layer signaling may be RRC signaling or MAC layer signaling, which, however, is not limited thereto. The dynamic signaling may be DCI that is sent by using a PDCCH or an ePDCCH, which, however, is not limited thereto.

In addition to receiving the reference signal resource configuration information sent by the base station, the UE may further obtain the reference signal resource configuration information according to a cell identity (ID) of a cell in which the UE is located. The base station may notify, in a broadcast or multicast manner, the UE of a reference signal resource configuration corresponding to each cell ID.

202. Receive a PMI reported by the UE, where the PMI is used to indicate a precoding matrix selected by the UE, the precoding matrix is selected by the UE based on the reference signal from a codebook, and a structure of the precoding matrix corresponds to an antenna port structure indicated by the antenna port configuration information. That the structure of the precoding matrix corresponds to the antenna port structure indicated by the antenna port configuration information may be that the structure of the precoding matrix corresponds to an antenna port configuration, thereby corresponding to the antenna port structure indicated by the antenna port configuration.

After sending the reference signal to the UE, the base station waits for the PMI reported by the UE. After receiving the reference signal, the UE selects one precoding matrix from the codebook based on the received reference signal. Specifically, the UE performs channel estimation based on the received reference signal, for example, the UE may obtain a channel estimation value from the received reference signaling by using a least square method or a minimum mean square error criterion; and then the UE may select, based on a predefined criterion, for example, a capacity, a throughput, or a maximum mutual information criterion, precoding from the codebook by using the obtained channel estimation value. Selecting the precoding matrix by using channel estimation and the predefined criterion is a conventional technology, and details are not described herein.

After selecting the precoding matrix, the UE sends the PMI that is used to indicate the selected precoding matrix to the base station. The base station receives the PMI reported by the UE.

It is noted herein that in step 202, the base station may receive the PMI that is reported by the UE and is used to indicate the selected precoding matrix, and the base station may further receive other CSI information, for example, RI and/ or CQI.

In an optional implementation manner of this embodiment, a manner in which the base station receives CSI that includes the PMI and is reported by the UE includes that: the base station receives the CSI that includes the PMI and is reported by the UE by using a physical uplink control channel (PUCCH) or a physical uplink shared channel (PUSCH), which, however, is not limited thereto.

It is noted herein that in addition to the foregoing steps, the base station may further obtain the precoding matrix according to the PMI reported by the UE, perform, by using the obtained precoding matrix, precoding on data to be sent to the UE, and send the precoded data; for example, the data signal is sent to the UE by using the PDSCH after being precoded.

The base station receives the PMI and obtains, from the codebook, the precoding matrix selected by the UE. Because the structure of the precoding matrix can automatically adapt to the antenna port structure, precision of CSI feedback or reporting is improved. The base station performs precoding on data by using the precoding matrix, and sends the data to the UE, which can improve a capacity and reliability of data transmission, thereby increasing a throughput and coverage of a system. In addition, the precoding matrix that automatically adapts to different antenna port structures may form different codebooks, so that the PMI can be reported or fed back based on the foregoing antenna port configuration information for only the antenna port structure indicated by the antenna port configuration information, thereby effectively reducing an overhead of CSI reporting or feedback.

It should be noted that the antenna port structure may be an antenna array structure.

In this embodiment, the antenna port structure indicated by the antenna port configuration information provides more antenna port information in addition to the quantity of antenna ports. The structure of the precoding matrix selected by the UE corresponds to the antenna port structure indicated by the antenna port configuration information. That is, the structure of the precoding matrix selected by the UE not only relates to the quantity of antenna ports, but also relates to the antenna port structure. If the quantity of antenna ports is the same, but antenna port structures are different, corresponding structures of a precoding matrix are different. That the structure of the precoding matrix corresponds to the antenna port structure indicated by the antenna port configuration information may be that the structure of the precoding matrix corresponds to an antenna port configuration, thereby corresponding to the antenna port structure indicated by the antenna port configuration. It can be learned that the structure of the precoding matrix in this embodiment can automatically adapt to the antenna port structure, thereby improving precision of CSI feedback or reporting.

In this embodiment, more information about an antenna port structure is provided, and a structure of a precoding matrix corresponds to an antenna port structure indicated by antenna port configuration information. This feature ensures that, in a process of CSI measurement and reporting, degrees of freedom in a horizontal direction and a vertical direction of an antenna of an AAS base station are both considered, so that precision of CSI reporting can be improved or an overhead of feedback can be reduced. The base station performs precoding on data by using the precoding matrix, and sends the data to the UE, which can improve a capacity and reliability of data transmission, thereby increasing a throughput and coverage of a system. The method is applicable to a scenario in which an antenna of an AAS base station is deployed, and resolves a problem of CSI reporting in an AAS base station scenario.

The following embodiments of the present invention describe in detail the precoding matrix and the antenna port structure in the technical solutions of the present invention by using a scenario in which an AAS base station is deployed as an example.

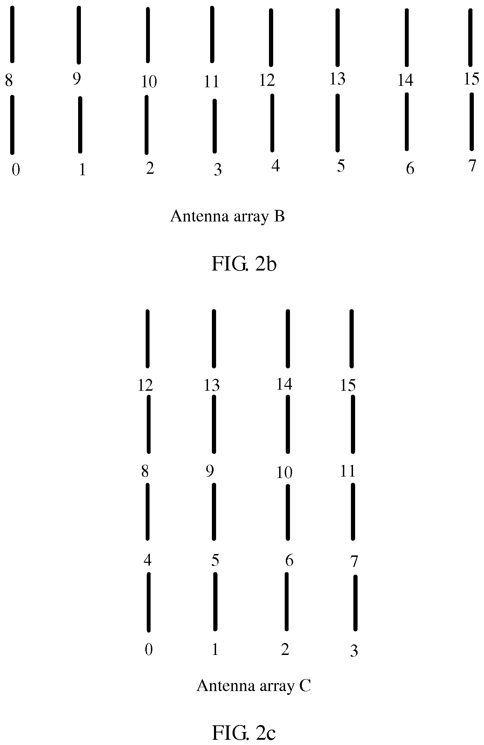

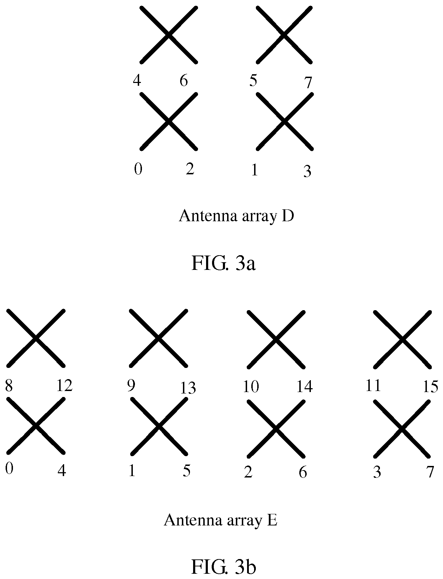

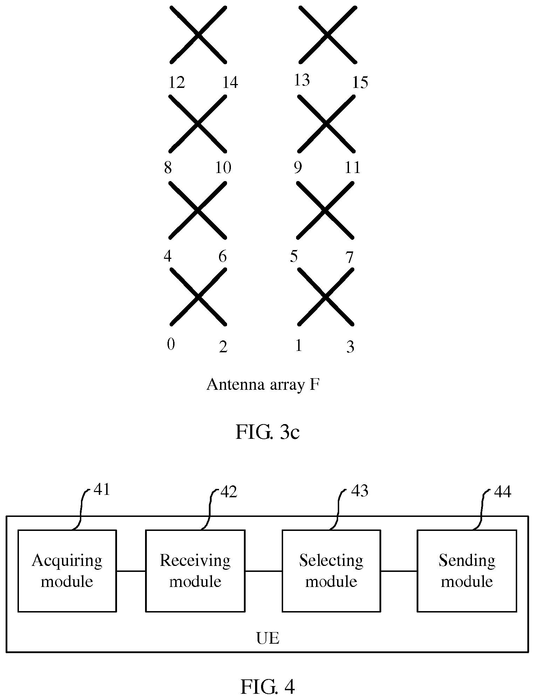

Generally, a reference signal usually corresponds to a physical antenna or a virtual antenna, where the virtual antenna may be obtained by using a weighted combination of multiple physical antennas. Actual antenna deployment may have different antenna configurations and antenna array forms. As shown in FIG. 2b, an antenna array B is a uniform linear array with two rows and eight columns. As shown in FIG. 2c, an antenna array C is a uniform linear array with four rows and four columns. Although the antenna array B and the array C both have 16 antenna ports, array forms of the antenna array B and the array C are different. As shown in FIG. 3b, an antenna array E is a cross polarization antenna array with two rows and four columns. As shown in FIG. 3c, an antenna F is a cross polarization antenna array with four rows and two columns. Different polarization antennas may be disposed in a same column. Although the antenna array E and the antenna array F both have 16 antenna ports, antenna forms of the antenna array E and the antenna array F are also different. Different antenna arrays correspond to different antenna port structures, and an antenna port structure corresponds to an antenna array structure in a one to one manner. As shown in FIG. 2b and FIG. 2c, antenna port structures are respectively 2×8 and 4×4.

Optionally, the antenna port configuration information in this embodiment of the present invention includes an index m and an index n, where the index m corresponds to a quantity of rows in an antenna port structure, that is, a quantity of rows in an antenna array structure corresponding to the antenna port structure, and the index n corresponds to a quantity of columns in an antenna port structure, that is, a quantity of columns in an antenna array structure corresponding to the antenna port structure. A product of the index m and the index n is a quantity of antenna ports N.

Uniform linear arrays shown in FIG. 2a to FIG. 2c are used as an example, and indexes corresponding to the antenna arrays A, B, and C are respectively (m, n) = (2, 4), (m, n) = (2, 8), (m, n) = (4, 4). Cross polarization antenna arrays shown in FIG. 3a to FIG. 3c are used as an example, and indexes corresponding to the antenna arrays D, E, F are respectively (m, n) = (2, 4), (m, n) = (2, 8), (m, n) = (4, 4); where two groups of antennas of different polarization may be disposed in a position of a same column. For example, the antenna array D is used as an example. (0, 1, 4, 5) is a co-polarization antenna group with 45° polarization; (2, 3, 6, 7) is a co-polarization antenna group with -45° polarization; 0 and 2 are disposed in a same position, 1 and 3 are disposed in a same position, 4 and 6 are disposed in a same position, and 5 and 7 are disposed in same position, so that antenna ports 0, 2, 4 and 6 are in a same column; antenna ports 1, 3, 5 and 7 are in a same column. The antenna arrays E and F may be deduced from this.

Based on the foregoing antenna port configuration, one structure of the precoding matrix in this embodiment of the present invention may be **W** = **W**₁**W**₂, where **W** is the precoding matrix, and **W**₁ and **W**₂ are matrices; in this embodiment of the present invention, specific meanings of the matrices **W**₁ and **W**₂ are not limited.

Optionally, ${W}_{1} = \left[\begin{matrix}X & 0 \\ 0 & X\end{matrix}\right] ,$ and **X** = **A** ⊗ **B**; where ⊗ indicates a Kronecker product, and A and B are matrices of m×p and (n/2)×q respectively. Specifically, 16 antennas are used as an example; an array structure is expressed as m=2, n=8, and A and B are matrices of 2×p and 4×q respectively. 16 antennas are used as an example; an array structure is expressed as m=4, n=4, and A and B are matrices of 4×p and 2×q respectively, where p and q are positive integers. Correspondingly, **W**₂ is a matrix of (pq)×*r*, and r is a rank of the precoding matrix **W**.

Alternatively, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of (m/2)×p and n×q respectively. Specifically, 16 antennas are used as an example; an array structure is expressed as m=4, n=8, and A and B are matrices of 2×p and 8×q respectively. 16 antennas are used as an example; an array structure is expressed as m=4, n=4, and A and B are matrices of 2×p and 4×q respectively, where p and q are positive integers. Correspondingly, **W**₂ is a matrix of (pq)×*r*, and r is a rank of the precoding matrix **W**.

In an optional implementation manner, **W**₁ = **A** ⊗ **B**, where ⊗ indicates a Kronecker product, and A and B are matrices of m×p and n×q respectively. Specifically, 16 antennas are used as an example; an array structure is expressed as m=2, n=8, and A and B are matrices of 2×p and 8×q respectively. 16 antennas are used as an example; an array structure is expressed as m=4, n=4, and A and B are matrices of 4×p and 4×q respectively, where p and q are integers. Correspondingly, **W**₂ is a matrix of (pq)×*r*, and r is a rank of the precoding matrix **W**

Alternatively, **W**₁ = **A** ⊗ **B**, where ⊗ indicates a Kronecker product, or A and B are matrices of n×p and m×q respectively. Specifically, 16 antennas are used as an example; an array structure is expressed as m=2, n=8, and A and B are matrices of 8×p and 2×q respectively. 16 antennas are used as an example; an array structure is expressed as m=4, n=4, and A and B are matrices of 4×p and 2×q respectively, where p and q are integers. Correspondingly, **W**₂ is a matrix of (pq)×*r*, and r is a rank of the precoding matrix **W**.

Based on the foregoing implementation manners, the PMI reported by the UE to the base station may include a first PMI and a second PMI. The first PMI is used to indicate the matrix **W**₁, and the second PMI is used to indicate the matrix **W**₂. Based on this, that the UE reports the PMI to the base station includes that: the UE separately reports the first PMI and the second PMI to the base station. In this implementation manner, a difference of meanings identified by the matrix **W**₁ and the matrix **W**₂ may be considered, so that corresponding PMIs are separately reported to the base station, and times, a frequency interval, and the like of reporting the first PMI and the second PMI are allowed to be different, which helps reduce an overhead of feedback.

FIG. 4 is a schematic structural diagram of a UE according to an embodiment of the present invention. As shown in FIG. 4, the UE includes: an acquiring module 41, a receiving module 42, a selecting module 43, and a sending module 44.

The acquiring module 41 is configured to acquire reference signal resource configuration information, where the reference signal resource configuration information includes antenna port configuration information, and the antenna port configuration information is used to indicate an antenna port structure.

The receiving module 42 is connected to the acquiring module 41, and is configured to receive, according to the reference signal resource configuration information acquired by the acquiring module 41, a reference signal sent by a base station.

The selecting module 43 is connected to the receiving module 42, and is configured to select a precoding matrix from a codebook based on the reference signal received by the receiving module 42, where a structure of the precoding matrix corresponds to the antenna port structure indicated by the antenna port configuration information.

The sending module 44 is connected to the selecting module 43, and is configured to report a PMI to the base station, where the PMI is used to indicate the precoding matrix selected by the selecting module 43.

In an optional implementation manner, the acquiring module 41 is specifically configured to receive the reference signal resource configuration information sent by the base station by using higher layer signaling or dynamic signaling. The higher layer signaling may be RRC signaling or MAC layer signaling, which, however, is not limited thereto. The dynamic signaling may be DCI that is sent by using a PDCCH or an ePDCCH, which, however, is not limited thereto.

In an optional implementation manner, the acquiring module 41 is specifically configured to obtain the reference signal resource configuration information according to a cell identity (ID) of a cell in which the UE is located.

In an optional implementation manner, the antenna port configuration information includes an index m and an index n. The index m corresponds to a quantity of rows in the antenna port structure, that is, a quantity of rows in an antenna array structure corresponding to the antenna port structure; the index n corresponds to a quantity of columns in the antenna port structure, that is, a quantity of columns in an antenna array structure corresponding to the antenna port structure. A product of the index m and the index n is a quantity of antenna ports N.

Based on the foregoing description, one structure of the precoding matrix in this embodiment may be **W** = **W**₁**W**₂, where **W** is the precoding matrix, and **W**₁ and **W**₂ are matrices. In this embodiment of the present invention, specific meanings of the matrices **W**₁ and **W**₂ are not limited.

Optionally, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of m×p and (n/2)×q respectively.

Specifically, 16 antennas are used as an example; an array structure is expressed as m=2, n=8, and A and B are matrices of 2×p and 4×q respectively. 16 antennas are used as an example; an array structure is expressed as m=4, n=4, and A and B are matrices of 4×p and 2×q respectively, where p and q are positive integers. Correspondingly, **W**₂ is a matrix of (pq)×*r*, and r is a rank of the precoding matrix **W**.

Alternatively, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of (m/2)×p and n×q respectively. Specifically, 16 antennas are used as an example; an array structure is expressed as m=4, n=8, and A and B are matrices of 2×p and 8×q respectively. 16 antennas are used as an example; an array structure is expressed as m=4, n=4, and A and B are matrices of 2×p and 4×q respectively, where p and q are positive integers. Correspondingly, **W**₂ is a matrix of (pq)×*r*, and r is a rank of the precoding matrix **W**.

In an optional implementation manner, **W**₁ = **A** ⊗ **B**, where ⊗ indicates a Kronecker product, and A and B are matrices of m×p and n×q respectively. Specifically, 16 antennas are used as an example; an array structure is expressed as m=2, n=8, and A and B are matrices of 2×p and 8×q respectively. 16 antennas are used as an example; an array structure is expressed as m=4, n=4, and A and B are matrices of 4×p and 4×q respectively, where p and q are integers. Correspondingly, **W**₂ is a matrix of (pq)×*r*, and r is a rank of the precoding matrix **W**

Alternatively, **W**₁ = **A** ⊗ **B**, where ⊗ indicates a Kronecker product, or A and B are matrices of n×p and m×q respectively. Specifically, 16 antennas are used as an example; an array structure is expressed as m=2, n=8, and A and B are matrices of 8×p and 2×q respectively. 16 antennas are used as an example; an array structure is expressed as m=4, n=4, and A and B are matrices of 4×p and 2×q respectively, where p and q are integers. Correspondingly, **W**₂ is a matrix of (pq)×*r*, and r is a rank of the precoding matrix **W**.

Based on the foregoing implementation manners, the PMI reported by the sending module 44 to the base station may include a first PMI and a second PMI. The first PMI is used to indicate the matrix **W**₁, and the second PMI is used to indicate the matrix **W**₂. Based on this, the sending module 44 is specifically configured to separately send the first PMI and the second PMI to the base station. In this implementation manner, a difference of meanings identified by the matrix **W**₁ and the matrix **W**₂ may be considered, so that corresponding PMIs are separately reported to the base station, and times, a frequency interval, and the like of reporting the first PMI and the second PMI are allowed to be different, which helps reduce an overhead of feedback, thereby improving a system throughput.

The UE provided in this embodiment acquires reference signal resource configuration information that includes antenna port configuration information, receives, according to the reference signal resource configuration information, a reference signal sent by a base station, selects a precoding matrix from a codebook based on the received reference signal, and reports, to the base station, a PMI used to indicate the selected precoding matrix, where the antenna port configuration information indicates an antenna port structure, and a structure of the precoding matrix corresponds to the antenna port structure. More information about the antenna port structure is provided, and the structure of the precoding matrix corresponds to the antenna port structure indicated by the antenna port configuration information. This feature ensures that, in a process of CSI measurement and reporting, degrees of freedom in a horizontal direction and a vertical direction of an antenna of an AAS base station are both considered, so that precision of CSI reporting or feedback can be improved, an overhead of CSI reporting or feedback is reduced, and a capacity or a throughput of data transmission is increased, thereby increasing a capacity and coverage of a system. The UE is applicable to a scenario in which an antenna of an AAS base station is deployed, and resolves a problem of CSI reporting in an AAS base station scenario.

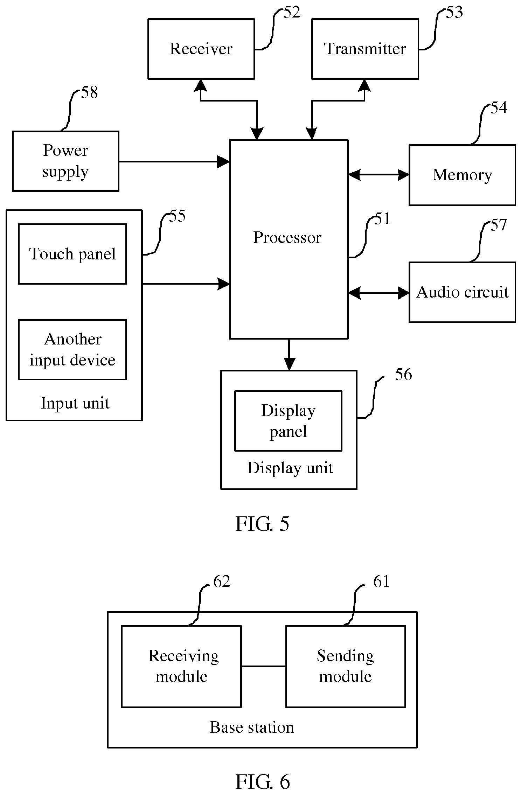

FIG. 5 is a schematic structural diagram of another UE according to an embodiment of the present invention. As shown in FIG. 5, the UE includes: a processor 51, a receiver 52, and a transmitter 53.

The processor 51 is configured to acquire reference signal resource configuration information, where the reference signal resource configuration information includes antenna port configuration information, and the antenna port configuration information is used to indicate an antenna port structure; and configured to select a precoding matrix from a codebook based on a reference signal received by the receiver 52, where a structure of the precoding matrix corresponds to the antenna port structure indicated by the antenna port configuration information.

The processor 51 may be a central processing unit (CPU), or an application specific integrated circuit (ASIC), or one or more integrated circuits configured to implement this embodiment of the present invention.

The receiver 52 is configured to receive, according to the reference signal resource configuration information acquired by the processor 51, the reference signal sent by a base station.

The transmitter 53 is configured to report a PMI to the base station, where the PMI is used to indicate the precoding matrix selected by the processor 51.

In an optional implementation manner, the processor 51 may be specifically configured to control the receiver 52 to receive the reference signal resource configuration information sent by the base station by using higher layer signaling or dynamic signaling. The higher layer signaling may be RRC signaling or MAC layer signaling, which, however, is not limited thereto. The dynamic signaling may be DCI that is sent by using a PDCCH or an ePDCCH, which, however, is not limited thereto.

In an optional implementation manner, the processor 51 may be specifically configured to obtain the reference signal resource configuration information according to a cell identity (ID) of a cell in which the UE is located.

In an optional implementation manner, the antenna port configuration information includes an index m and an index n. The index m corresponds to a quantity of rows in the antenna port structure, that is, a quantity of rows in an antenna array structure corresponding to the antenna port structure; the index n corresponds to a quantity of columns in the antenna port structure, that is, a quantity of columns in an antenna array structure corresponding to the antenna port structure. A product of the index m and the index n is a quantity of antenna ports N.

Based on the foregoing description, one structure of the precoding matrix in this embodiment may be **W** = **W**₁**W**₂, where **W** is the precoding matrix, and **W**₁ and **W**₂ are matrices. In this embodiment of the present invention, specific meanings of the matrices **W**₁ and **W**₂ are not limited.

Optionally, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of m×p and (n/2)×q respectively. Specifically, 16 antennas are used as an example; an array structure is expressed as m=2, n=8, and A and B are matrices of 2×p and 4×q respectively. 16 antennas are used as an example; an array structure is expressed as m=4, n=4, and A and B are matrices of 4×p and 2×q respectively, where p and q are positive integers. Correspondingly, **W**₂ is a matrix of (pq)×*r*, and r is a rank of the precoding matrix **W**.

Alternatively, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of (m/2)×p and n×q respectively. Specifically, 16 antennas are used as an example; an array structure is expressed as m=4, n=8, and A and B are matrices of 2×p and 8×q respectively. 16 antennas are used as an example; an array structure is expressed as m=4, n=4, and A and B are matrices of 2×p and 4×q respectively, where p and q are positive integers. Correspondingly, **W**₂ is a matrix of (pq)×*r*, and r is a rank of the precoding matrix **W**.

In an optional implementation manner, **W**₁ = **A** ⊗ **B**, where ⊗ indicates a Kronecker product, and A and B are matrices of m×p and n×q respectively. Specifically, 16 antennas are used as an example; an array structure is expressed as m=2, n=8, and A and B are matrices of 2×p and 8×q respectively. 16 antennas are used as an example; an array structure is expressed as m=4, n=4, and A and B are matrices of 4×p and 4×q respectively, where p and q are integers. Correspondingly, **W**₂ is a matrix of (pq)×*r*, and r is a rank of the precoding matrix **W**

Alternatively, **W**₁ = **A** ⊗ **B**, where ⊗ indicates a Kronecker product, or A and B are matrices of n×p and m×q respectively. Specifically, 16 antennas are used as an example; an array structure is expressed as m=2, n=8, and A and B are matrices of 8×p and 2×q respectively. 16 antennas are used as an example; an array structure is expressed as m=4, n=4, and A and B are matrices of 4×p and 2×q respectively, where p and q are integers. Correspondingly, W₂ is a matrix of (pq)×*r*, and r is a rank of the precoding matrix **W**.

Based on the foregoing implementation manners, the PMI reported by the transmitter 53 to the base station may include a first PMI and a second PMI. The first PMI is used to indicate the matrix **W**₁, and the second PMI is used to indicate the matrix **W**₂. Based on this, the transmitter 53 may be specifically configured to separately report the first PMI and the second PMI to the base station. In this implementation manner, a difference of meanings identified by the matrix **W**₁ and the matrix **W**₂ may be considered, so that corresponding PMIs are separately reported to the base station, and times, a frequency interval, and the like of reporting the first PMI and the second PMI are allowed to be different, which helps reduce an overhead of feedback, thereby improving a system throughput.

Further, as shown in FIG. 5, the UE may further include a memory 54. The memory 54 is configured to store a program. Specifically, the program may include program code, where the program code includes a computer operation instruction. Optionally, the processor 51 may be specifically configured to execute the program stored in the memory 54 to implement the forgoing function.

The memory 54 may include a high-speed RAM memory, and may also include a non-volatile memory, for example, at least one disk storage.

In an implementation, the receiver 52 and the transmitter 53 may be implemented by using various communications modules of the UE, which may be, for example, a radio frequency (RF) module, a WiFi module, and the like.

Further, as shown in FIG. 5, the UE further includes: an input unit 55, a display unit 56, an audio circuit 57, a power supply 58, and the like. The input unit 55, the display unit 56, the audio circuit 57, and the power supply 58 are separately connected to the processor 51. The power supply 58 is mainly configured to supply power to the processor 51, and may further supply power to another module. Therefore, in addition to being connected to the processor 51, the power supply 58 may further be connected to another module (not shown in FIG. 5). The input unit 55 may include a touch panel or another input device; the display unit 56 may include a display panel, and the like.

The UE provided in this embodiment acquires reference signal resource configuration information that includes antenna port configuration information, receives, according to the reference signal resource configuration information, a reference signal sent by a base station, selects a precoding matrix from a codebook based on the received reference signal, and reports, to the base station, a PMI used to indicate the selected precoding matrix, where the antenna port configuration information indicates an antenna port structure, and a structure of the precoding matrix corresponds to the antenna port structure. More information about the antenna port structure is provided, and the structure of the precoding matrix corresponds to the antenna port structure indicated by the antenna port configuration information. This feature ensures that, in a process of CSI measurement and reporting, degrees of freedom in a horizontal direction and a vertical direction of an antenna of an AAS base station are both considered, so that precision of CSI reporting or feedback can be improved, an overhead of CSI reporting or feedback is reduced, and a capacity or a throughput of data transmission is increased, thereby increasing a capacity and coverage of a system. The UE is applicable to a scenario in which an antenna of an AAS base station is deployed, and resolves a problem of CSI reporting in an AAS base station scenario.

FIG. 6 is a schematic structural diagram of a base station according to an embodiment of the present invention. As shown in FIG. 6, the base station includes: a sending module 61 and a receiving module 62.

The sending module 61 is configured to send a reference signal to a UE, where the UE receives the reference signal based on pre-acquired reference signal resource configuration information, the reference signal resource configuration information includes antenna port configuration information, and the antenna port configuration information is used to indicate an antenna port structure.

The receiving module 62 is configured to receive a PMI reported by the UE, where the PMI is used to indicate a precoding matrix selected by the UE, the precoding matrix is selected by the UE from a codebook based on the reference signal, and a structure of the precoding matrix corresponds to the antenna port structure indicated by the antenna port configuration information.

In an optional implementation manner, the sending module 61 is further configured to send the reference signal resource configuration information to the UE by using higher layer signaling or dynamic signaling. The higher layer signaling may be RRC signaling or MAC layer signaling, which, however, is not limited thereto. The dynamic signaling may be DCI that is sent by using a PDCCH or an ePDCCH, which, however, is not limited thereto.

In an optional implementation manner, the antenna port configuration information includes an index m and an index n. The index m corresponds to a quantity of rows in the antenna port structure, that is, a quantity of rows in an antenna array structure corresponding to the antenna port structure; the index n corresponds to a quantity of columns in the antenna port structure, that is, a quantity of columns in an antenna array structure corresponding to the antenna port structure. A product of the index m and the index n is a quantity of antenna ports N.

Based on the foregoing description, one structure of the precoding matrix in this embodiment may be **W** = **W**₁**W**₂, where **W** is the precoding matrix, and **W**₁ and **W**₂ are matrices; in this embodiment of the present invention, specific meanings of the matrices **W**₁ and **W**₂ are not limited.

Optionally, ${W}_{1} = \left[\begin{matrix}X & 0 \\ 0 & X\end{matrix}\right] ,$ and **X** = **A** ⊗ **B,** where ⊗ indicates a Kronecker product, and A and B are matrices of m×p and (n/2)×q respectively. Specifically, 16 antennas are used as an example; an array structure is expressed as m=2, n=8, and A and B are matrices of 2×p and 4×q respectively. 16 antennas are used as an example; an array structure is expressed as m=4, n=4, and A and B are matrices of 4×p and 2×q respectively, where p and q are positive integers. Correspondingly, **W**₂ is a matrix of (pq)×*r*, and r is a rank of the precoding matrix **W**.

Alternatively, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of (m/2)×p and n×q respectively. Specifically, 16 antennas are used as an example; an array structure is expressed as m=4, n=8, and A and B are matrices of 2×p and 8×q respectively. 16 antennas are used as an example; an array structure is expressed as m=4, n=4, and A and B are matrices of 2×p and 4×q respectively, where p and q are positive integers. Correspondingly, **W**₂ is a matrix of (pq)×*r*, and r is a rank of the precoding matrix **W**.

In an optional implementation manner, **W**₁ = **A** ⊗ **B**, where ⊗ indicates a Kronecker product, and A and B are matrices of m×p and n×q respectively. Specifically, 16 antennas are used as an example; an array structure is expressed as m=2, n=8, and A and B are matrices of 2×p and 8×q respectively. 16 antennas are used as an example; an array structure is expressed as m=4, n=4, and A and B are matrices of 4×p and 4×q respectively, where p and q are integers. Correspondingly, **W**₂ is a matrix of (pq)×*r*, and r is a rank of the precoding matrix **W**

Alternatively, **W**₁ = **A** ⊗ **B**, where ⊗ indicates a Kronecker product, or A and B are matrices of n×p and m×q respectively. Specifically, 16 antennas are used as an example; an array structure is expressed as m=2, n=8, and A and B are matrices of 8×p and 2×q respectively. 16 antennas are used as an example; an array structure is expressed as m=4, n=4, and A and B are matrices of 4×p and 2×q respectively, where p and q are integers. Correspondingly, **W**₂ is a matrix of (pq)×*r*, and r is a rank of the precoding matrix **W**.

Based on the foregoing implementation manners, the PMI received by the receiving module 62 may include a first PMI and a second PMI. The first PMI is used to indicate the matrix **W**₁, and the second PMI is used to indicate the matrix **W**₂. Based on this, the receiving module 62 is specifically configured to separately receive the first PMI and the second PMI that are reported by the UE. In this implementation manner, a difference of meanings identified by the matrix **W**₁ and the matrix **W**₂ may be considered, so that the base station receives the PMIs that are separately reported by the UE, and times, a frequency interval, and the like of reporting the first PMI and the second PMI are allowed to be different, which helps reduce an overhead of CSI reporting and feedback, thereby improving a system throughput.

After sending a reference signal to a UE, the base station provided in this embodiment receives a PMI that is reported by the UE and is used to indicate a precoding matrix whose structure corresponds to an antenna port structure indicated by antenna port configuration information. This ensures that, in a process of CSI measurement and reporting, degrees of freedom in a horizontal direction and a vertical direction of an antenna of an AAS base station are both considered, so that precision of CSI reporting or feedback can be improved, an overhead of CSI reporting or feedback is reduced, and a capacity or a throughput of data transmission is increased, thereby increasing a capacity and coverage of a system. The base station is applicable to a scenario in which an antenna of an AAS base station is deployed, and resolves a problem of CSI reporting in an AAS base station scenario.

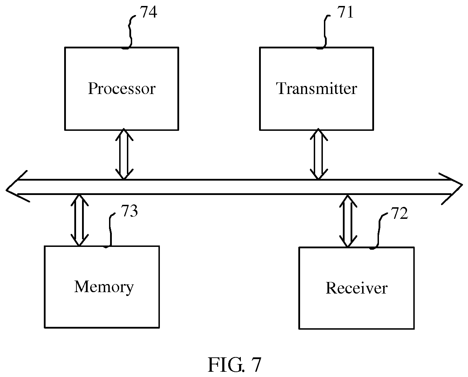

FIG. 7 is a schematic structural diagram of another base station according to an embodiment of the present invention. As shown in FIG. 7, the base station includes: a transmitter 71 and a receiver 72.

The transmitter 71 is configured to send a reference signal to a UE, where the UE receives the reference signal based on pre-acquired reference signal resource configuration information, the reference signal resource configuration information includes antenna port configuration information, and the antenna port configuration information is used to indicate an antenna port structure.

The receiver 72 is configured to receive a PMI reported by the UE, where the PMI is used to indicate a precoding matrix selected by the UE, the precoding matrix is selected by the UE from a codebook based on the reference signal, and a structure of the precoding matrix corresponds to the antenna port structure indicated by the antenna port configuration information.

In an optional implementation manner, the transmitter 71 is further configured to send the reference signal resource configuration information to the UE by using higher layer signaling or dynamic signaling. The higher layer signaling may be RRC signaling or MAC layer signaling, which, however, is not limited thereto. The dynamic signaling may be DCI that is sent by using a PDCCH or an ePDCCH, which, however, is not limited thereto.

In an optional implementation manner, the antenna port configuration information includes an index m and an index n. The index m corresponds to a quantity of rows in the antenna port structure, that is, a quantity of rows in an antenna array structure corresponding to the antenna port structure; the index n corresponds to a quantity of columns in the antenna port structure, that is, a quantity of columns in an antenna array structure corresponding to the antenna port structure. A product of the index m and the index n is a quantity of antenna ports N.

Based on the foregoing description, one structure of the precoding matrix in this embodiment may be **W** = **W**₁**W**₂, where **W** is the precoding matrix, and **W**₁ and **W**₂ are matrices; in this embodiment of the present invention, specific meanings of the matrices **W**₁ and **W**₂ are not limited.

Optionally, ${W}_{1} = \left[\begin{matrix}X & 0 \\ 0 & X\end{matrix}\right] ,$ and **X = A** ⊗ **B**, where ⊗ indicates a Kronecker product, and A and B are matrices of m×p and (n/2)×q respectively. Specifically, 16 antennas are used as an example; an array structure is expressed as m=2, n=8, and A and B are matrices of 2×p and 4×q respectively. 16 antennas are used as an example; an array structure is expressed as m=4, n=4, and A and B are matrices of 4×p and 2×q respectively, where p and q are positive integers. Correspondingly, **W**₂ is a matrix of (pq)×*r*, and r is a rank of the precoding matrix **W**.

Alternatively, ${W}_{1} = \left[\begin{matrix}X & 0 \\ 0 & X\end{matrix}\right] ,$ and **X** = **A** ⊗ **B**, where ⊗ indicates a Kronecker product, and A and B are matrices of (m/2)×p and n×q respectively. Specifically, 16 antennas are used as an example; an array structure is expressed as m=4, n=8, and A and B are matrices of 2×p and 8×q respectively. 16 antennas are used as an example; an array structure is expressed as m=4, n=4, and A and B are matrices of 2×p and 4×q respectively, where p and q are positive integers. Correspondingly, **W**₂ is a matrix of (pq)×*r*, and r is a rank of the precoding matrix **W**.

In an optional implementation manner, **W**₁ = **A** ⊗ **B**, where ⊗ indicates a Kronecker product, and A and B are matrices of m×p and n×q respectively. Specifically, 16 antennas are used as an example; an array structure is expressed as m=2, n=8, and A and B are matrices of 2×p and 8×q respectively. 16 antennas are used as an example; an array structure is expressed as m=4, n=4, and A and B are matrices of 4×p and 4×q respectively, where p and q are integers. Correspondingly, **W**₂ is a matrix of (pq)×*r*, and r is a rank of the precoding matrix **w**

Alternatively, **W**₁ = **A** ⊗ **B**, where ⊗ indicates a Kronecker product, or A and B are matrices of n×p and m×q respectively. Specifically, 16 antennas are used as an example; an array structure is expressed as m=2, n=8, and A and B are matrices of 8×p and 2×q respectively. 16 antennas are used as an example; an array structure is expressed as m=4, n=4, and A and B are matrices of 4×p and 2×q respectively, where p and q are integers. Correspondingly, **W**₂ is a matrix of (pq)×*r*, and r is a rank of the precoding matrix **W**.

Based on the foregoing implementation manners, the PMI received by the receiver 72 may include a first PMI and a second PMI. The first PMI is used to indicate the matrix **W**₁, and the second PMI is used to indicate the matrix **W**₂. Based on this, the receiver 72 may be specifically configured to separately receive the first PMI and the second PMI that are reported by the UE. In this implementation manner, a difference of meanings identified by the matrix **W**₁ and the matrix **W**₂ may be considered, so that the base station receives the PMIs that are separately reported by the UE, and times, a frequency interval, and the like of reporting the first PMI and the second PMI are allowed to be different, which helps reduce an overhead of CSI reporting and feedback, thereby improving a system throughput.

Further, as shown in FIG. 7, the base station further includes: a memory 73 and a processor 74. The memory 73 is configured to store a program. Specifically, the program may include program code, where the program code includes a computer operation instruction. The memory 73 may include a high-speed RAM memory, and may also include a non-volatile memory (non-volatile memory), for example, at least one disk storage.

The processor 74 is configured to execute the program stored in the memory 73, so as to implement control logic of the base station, and the like. The processor 74 may be a CPU, or a specific ASIC, or one or more integrated circuits that are configured to implement this embodiment of the present invention.

Optionally, in a specific implementation, if the transmitter 71, the receiver 72, the memory 73, and the processor 74 are implemented independently, the transmitter 71, the receiver 72, the memory 73, and the processor 74 may be connected to each other by using a bus and complete communication with each other. The bus may be an industry standard architecture (ISA) bus, a Peripheral Component Interconnect (PCI) bus, an Extended Industry Standard Architecture (EISA) bus, or the like. The bus may be classified into an address bus, a data bus, a control bus, and the like. For ease of denotation, the bus is indicated by using only one thick line in FIG. 7; however, it does not indicate that there is only one bus or only one type of bus.

Optionally, in a specific implementation, if the transmitter 71, the receiver 72, the memory 73, and the processor 74 are integrated into one chip for implementation, the transmitter 71, the receiver 72, the memory 73, and the processor 74 may implement communication with each other by using an internal interface.

After sending a reference signal to a UE, the base station provided in this embodiment receives a PMI that is reported by the UE and is used to indicate a precoding matrix whose structure corresponds to an antenna port structure indicated by antenna port configuration information. This ensures that, in a process of CSI measurement and reporting, degrees of freedom in a horizontal direction and a vertical direction of an antenna of an AAS base station are both considered, so that precision of CSI reporting or feedback can be improved, an overhead of CSI reporting or feedback is reduced, and a capacity or a throughput of data transmission is increased, thereby increasing a capacity and coverage of a system. The base station is applicable to a scenario in which an antenna of an AAS base station is deployed, and resolves a problem of CSI reporting in an AAS base station scenario.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

## Claims

1. A method for reporting channel state information, comprising:
acquiring reference signal resource configuration information, wherein the reference signal resource configuration information comprises antenna port configuration information, and the antenna port configuration information is used to indicate an antenna port structure;
receiving, according to the reference signal resource configuration information, a reference signal sent by a base station;
selecting a precoding matrix from a codebook based on the received reference signal, wherein a structure of the precoding matrix corresponds to the antenna port structure indicated by the antenna port configuration information; and
reporting a precoding matrix indicator, PMI, to the base station, wherein the PMI is used to indicate the selected precoding matrix;
wherein the structure of the precoding matrix is **W** = **W**₁**W**₂, wherein ${W}_{1} = \left[\begin{matrix}X & 0 \\ 0 & X\end{matrix}\right] ,$ and **X** = **A** ⊗ **B;** ⊗ indicates a Kronecker product; A and B are matrices of m×p and (n/2)×q respectively, or A and B are matrices of (m/2)×p and n×q respectively; **W**₂ is a matrix of (2*pq*)×*r,* wherein p and q are positive integers, and r is a rank of the precoding matrix, wherein m corresponds to a quantity of rows in the antenna port structure, and n corresponds to a quantity of columns in the antenna port structure.

2. The method according to claim 1, wherein the PMI comprises a first PMI used to indicate the matrix **W**₁ and a second PMI used to indicate the matrix **W**₂; wherein
the reporting a precoding matrix indicator, PMI, to the base station comprises:
separately reporting the first PMI and the second PMI to the base station.

3. A method for receiving channel state information, comprising:
sending a reference signal to user equipment, wherein the user equipment receives the reference signal based on pre-acquired reference signal resource configuration information, the reference signal resource configuration information comprises antenna port configuration information, and the antenna port configuration information is used to indicate an antenna port structure; and
receiving a precoding matrix indicator, PMI, reported by the user equipment, wherein the PMI is used to indicate a precoding matrix selected by the user equipment, the precoding matrix is selected by the user equipment from a codebook based on the reference signal, and a structure of the precoding matrix corresponds to the antenna port structure indicated by the antenna port configuration information;
wherein the structure of the precoding matrix is **W** = **W**₁**W**₂, wherein ${W}_{1} = \left[\begin{matrix}X & 0 \\ 0 & X\end{matrix}\right] ,$ and **X** = **A** ⊗ **B**; ⊗ indicates a Kronecker product; A and B are matrices of m×p and (n/2)×q respectively, or A and B are matrices of (m/2)×p and n×q respectively; **W**₂ is a matrix of (2*pq)* × *r*, wherein p and q are positive integers, and r is a rank of the precoding matrix, wherein m corresponds to a quantity of rows in the antenna port structure, and n corresponds to a quantity of columns in the antenna port structure.

4. The method according to claim 3, wherein the PMI comprises a first PMI used to indicate the matrix **W**₁ and a second PMI used to indicate the matrix **W**₂; wherein
the receiving a precoding matrix indicator, PMI, reported by the user equipment comprises:
separately receiving the first PMI and the second PMI that are reported by the user equipment.

5. User equipment, comprising:
an acquiring module (41), configured to acquire reference signal resource configuration information, wherein the reference signal resource configuration information comprises antenna port configuration information, and the antenna port configuration information is used to indicate an antenna port structure;
a receiving module (42), configured to receive, according to the reference signal resource configuration information acquired by the acquiring module, a reference signal sent by a base station;
a selecting module (43), configured to select a precoding matrix from a codebook based on the reference signal received by the receiving module, wherein a structure of the precoding matrix corresponds to the antenna port structure indicated by the antenna port configuration information; and
a sending module (44), configured to report a precoding matrix indicator, PMI, to the base station, wherein the PMI is used to indicate the precoding matrix selected by the selecting module;
wherein the structure of the precoding matrix is **W** = **W**₁**W**₂, wherein ${W}_{1} = \left[\begin{matrix}X & 0 \\ 0 & X\end{matrix}\right] ,$ and **X = A** ⊗ **B;** ⊗ indicates a Kronecker product; A and B are matrices of m×p and (n/2)×q respectively, or A and B are matrices of (m/2)×p and n×q respectively; **W**₂ is a matrix of *(2pq)* ×*r ,* wherein p and q are positive integers, and r is a rank of the precoding matrix, wherein m corresponds to a quantity of rows in the antenna port structure, and n corresponds to a quantity of columns in the antenna port structure.

6. The user equipment according to claim 5, wherein the PMI comprises a first PMI used to indicate the matrix **W**₁ and a second PMI used to indicate the matrix **W**₂; wherein
the sending module is specifically configured to separately report the first PMI and the second PMI to the base station.

7. A base station, comprising:
a sending module (61), configured to send a reference signal to user equipment, wherein the user equipment receives the reference signal based on pre-acquired reference signal resource configuration information, the reference signal resource configuration information comprises antenna port configuration information, and the antenna port configuration information is used to indicate an antenna port structure; and
a receiving module (62), configured to receive a precoding matrix indicator, PMI, reported by the user equipment, wherein the PMI is used to indicate a precoding matrix selected by the user equipment, the precoding matrix is selected by the user equipment from a codebook based on the reference signal, and a structure of the precoding matrix corresponds to the antenna port structure indicated by the antenna port configuration information;
wherein the structure of the precoding matrix is **W** = **W**₁**W**₂, wherein ${W}_{1} = \left[\begin{matrix}X & 0 \\ 0 & X\end{matrix}\right] ,$ and **X** = **A** ⊗ **B;** ⊗ indicates a Kronecker product; A and B are matrices of m×p and (n/2)×q respectively, or A and B are matrices of (m/2)×p and n×q respectively; **W**₂ is a matrix of *(2pq)* ×*r,* wherein p and q are positive integers, and r is a rank of the precoding matrix, wherein m corresponds to a quantity of rows in the antenna port structure, and n corresponds to a quantity of columns in the antenna port structure.

8. The base station according to claim 7, wherein the PMI comprises a first PMI used to indicate the matrix **W**₁ and a second PMI used to indicate the matrix **W**₂; wherein
the receiving module is specifically configured to separately receive the first PMI and the second PMI that are reported by the user equipment.

## Patentansprüche

1. Verfahren zum Melden von Kanalzustandsinformationen, umfassend:
Erfassen von Ressourcenkonfigurationsinformationen für Referenzsignale, wobei die Ressourcenkonfigurationsinformationen für Referenzsignale Konfigurationsinformationen für Antennenanschlüsse umfassen, und wobei die Konfigurationsinformationen für Antennenanschlüsse verwendet werden, um eine Antennenanschlussstruktur anzuzeigen;
Empfangen gemäß den Ressourcenkonfigurationsinformationen für Referenzsignale eines Referenzsignals, das von einer Basisstation gesendet wird;
Auswählen einer Vorcodierungsmatrix aus einem Codebuch aufgrund des empfangenen Referenzsignals, wobei eine Struktur der Vorcodierungsmatrix der Antennenanschlussstruktur entspricht, die von den Konfigurationsinformationen für Antennenanschlüsse angezeigt wird; und
Melden einer Vorcodierungsmatrixanzeige (Precoding Matrix Indicator, PMI) an die Basisstation, wobei die PMI verwendet wird, um die ausgewählte Vorcodierungsmatrix anzuzeigen;
wobei die Struktur der Vorcodierungsmatrix **W** = **W**₁ **W**₂ ist, wobei ${W}_{1} = \left[\begin{matrix}X & 0 \\ 0 & X\end{matrix}\right] ,$ und **X** = **A ⊗ B;** ⊗ ein Kronecker-Produkt anzeigt; A und B Matrizen von m × p bzw. (n / 2) × q sind, oder A und B Matrizen von (m / 2) × p bzw. n × q sind;
**W**₂ eine Matrix von (2 *pq)* × *r* ist, wobei p und q positive ganze Zahlen sind, und r ein Rang der Vorcodierungsmatrix ist, wobei m einer Anzahl von Reihen in der Antennenanschlussstruktur entspricht und n einer Anzahl von Spalten in der Antennenanschlussstruktur entspricht.

2. Verfahren nach Anspruch 1, wobei die PMI eine erste PMI, die verwendet wird, um die Matrix **W**₁ anzuzeigen, und eine zweite PMI umfasst, die verwendet wird, um die Matrix **W**₂ anzuzeigen; wobei das Melden einer Vorcodierungsmatrixanzeige, PMI, an die Basisstation umfasst: getrenntes Melden der ersten PMI und der zweiten PMI an die Basisstation.

3. Verfahren zum Empfangen von Kanalzustandsinformationen, umfassend:
Senden eines Referenzsignals an ein Benutzergerät, wobei das Benutzergerät das Referenzsignal aufgrund zuvor erfasster Ressourcenkonfigurationsinformationen für Referenzsignale empfängt, wobei die Ressourcenkonfigurationsinformationen für Referenzsignale Konfigurationsinformationen für Antennenanschlüsse umfassen und wobei die Konfigurationsinformationen für Antennenanschlüsse verwendet werden, um eine Antennenanschlussstruktur anzuzeigen; und
Empfangen einer Vorcodierungsmatrixanzeige (Precoding Matrix Indicator, PMI), die von dem Benutzergerät gemeldet wird, wobei die PMI verwendet wird, um eine Vorcodierungsmatrix anzuzeigen, die von dem Benutzergerät ausgewählt wird, wobei die Vorcodierungsmatrix von dem Benutzergerät aufgrund des Referenzsignals aus einem Codebuch ausgewählt wird, und wobei eine Struktur der Vorcodierungsmatrix der Antennenanschlussstruktur entspricht, die von den Konfigurationsinformationen für Antennenanschlüsse angezeigt werden;
wobei die Struktur der Vorcodierungsmatrix **W** = **W**₁ **W**₂ ist, wobei ${W}_{1} = \left[\begin{matrix}X & 0 \\ 0 & X\end{matrix}\right] ,$ und **X** = **A ⊗ B;** ⊗ ein Kronecker-Produkt anzeigt; A und B Matrizen von m × p bzw. (n / 2) × q sind, oder A und B Matrizen von (m / 2) × p bzw. n × q sind;
**W**2 eine Matrix von (2 *pq)* × *r* ist, wobei p und q positive ganze Zahlen sind, und r ein Rang der Vorcodierungsmatrix ist, wobei m einer Anzahl von Reihen in der Antennenanschlussstruktur entspricht und n einer Anzahl von Spalten in der Antennenanschlussstruktur entspricht.

4. Verfahren nach Anspruch 3, wobei die PMI eine erste PMI, die verwendet wird, um die Matrix **W**₁ anzuzeigen, und eine zweite PMI umfasst, die verwendet wird, um die Matrix **W**₂ anzuzeigen; wobei
das Empfangen einer Vorcodierungsmatrixanzeige (Precoding Matrix Indicator, PMI), die von dem Benutzergerät gemeldet wird, umfasst:
separates Empfangen der ersten PMI und der zweiten PMI, die von dem Benutzergerät gemeldet werden.

5. Benutzergerät, umfassend:
ein Erfassungsmodul (41), das konfiguriert ist zum Erfassen von Ressourcenkonfigurationsinformationen für Referenzsignale, wobei die Ressourcenkonfigurationsinformationen für Referenzsignale Konfigurationsinformationen für Antennenanschlüsse umfassen, und wobei die Konfigurationsinformationen für Antennenanschlüsse verwendet werden, um eine Antennenanschlussstruktur anzuzeigen;
ein Empfangsmodul (42), das konfiguriert ist zum Empfangen gemäß den Ressourcenkonfigurationsinformationen für Referenzsignale, die durch das Erfassungsmodul erfasst werden, eines Referenzsignals, das von einer Basisstation gesendet wird;
ein Auswahlmodul (43), das konfiguriert ist zum Auswählen einer Vorcodierungsmatrix aus einem Codebuch aufgrund des von dem Empfangsmodul empfangenen Referenzsignals, wobei eine Struktur der Vorcodierungsmatrix der Antennenanschlussstruktur entspricht, die von den Konfigurationsinformationen für Antennenanschlüsse angezeigt werden; und
ein Sendemodul (44), das konfiguriert ist zum Melden einer Vorcodierungsmatrixanzeige (Precoding Matrix Indicator, PMI) an die Basisstation, wobei die PMI verwendet wird, um die Vorcodierungsmatrix anzuzeigen, die von dem Auswahlmodul ausgewählt wird,
wobei die Struktur der Vorcodierungsmatrix **W** = **W**₁**W**₂ ist, wobei ${W}_{1} = \left[\begin{matrix}X & 0 \\ 0 & X\end{matrix}\right] ,$ und **X** = **A ⊗ B;** ⊗ ein Kronecker-Produkt anzeigt; A und B Matrizen von m × p bzw. (n / 2) × q sind, oder A und B Matrizen von (m / 2) × p bzw. n × q sind;
**W**₂ eine Matrix von (2 *pq)* × *r* ist, wobei p und q positive ganze Zahlen sind, und r ein Rang der Vorcodierungsmatrix ist, wobei m einer Anzahl von Reihen in der Antennenanschlussstruktur entspricht und n einer Anzahl von Spalten in der Antennenanschlussstruktur entspricht.

6. Benutzergerät nach Anspruch 5, wobei die PMI eine erste PMI, die verwendet wird, um die Matrix **W**₁ anzuzeigen, und eine zweite PMI umfasst, die verwendet wird, um die Matrix **W**₂ anzuzeigen; wobei
das Sendemodul insbesondere konfiguriert ist zum separaten Melden der ersten PMI und der zweiten PMI an die Basisstation.

7. Basisstation, umfassend:
ein Sendemodul (61), das konfiguriert ist zum Senden eines Referenzsignals an ein Benutzergerät, wobei das Benutzergerät das Referenzsignal aufgrund zuvor erfasster Ressourcenkonfigurationsinformationen für Referenzsignale empfängt, wobei die Ressourcenkonfigurationsinformationen für Referenzsignale Konfigurationsinformationen für Antennenanschlüsse umfassen und wobei die Konfigurationsinformationen für Antennenanschlüsse verwendet werden, um eine Antennenanschlussstruktur anzuzeigen; und
ein Empfangsmodul (62), das konfiguriert ist zum Empfangen einer Vorcodierungsmatrixanzeige (Precoding Matrix Indicator, PMI), die von dem Benutzergerät gemeldet wird, wobei die PMI verwendet wird, um eine Vorcodierungsmatrix anzuzeigen, die von dem Benutzergerät ausgewählt wird, wobei die Vorcodierungsmatrix von dem Benutzergerät aufgrund des Referenzsignals aus einem Codebuch ausgewählt wird, und wobei eine Struktur der Vorcodierungsmatrix der Antennenanschlussstruktur entspricht, die von den Konfigurationsinformationen für Antennenanschlüsse angezeigt werden;
wobei die Struktur der Vorcodierungsmatrix **W** = **W**₁ **W**₂ ist, wobei ${W}_{1} = \left[\begin{matrix}X & 0 \\ 0 & X\end{matrix}\right] ,$ und **X** = **A ⊗ B;** ⊗ ein Kronecker-Produkt anzeigt; A und B Matrizen von m × p bzw. (n / 2) × q sind, oder A und B Matrizen von (m / 2) × p bzw. n × q sind;
**W**2 eine Matrix von (2 *pq)* × *r* ist, wobei p und q positive ganze Zahlen sind, und r ein Rang der Vorcodierungsmatrix ist, wobei m einer Anzahl von Reihen in der Antennenanschlussstruktur entspricht und n einer Anzahl von Spalten in der Antennenanschlussstruktur entspricht.

8. Basisstation nach Anspruch 7, wobei die PMI eine erste PMI, die verwendet wird, um die Matrix **W**₁ anzuzeigen, und eine zweite PMI umfasst, die verwendet wird, um die Matrix **W**₂ anzuzeigen; wobei
das Empfangsmodul insbesondere konfiguriert ist zum: separaten Empfangen der ersten PMI und der zweiten PMI, die von dem Benutzergerät gemeldet werden.

## Revendications

1. Procédé pour rapporter des informations d'état de canal, comprenant les étapes consistant à :
acquérir des informations de configuration de ressources de signal de référence, les informations de configuration de ressources de signal de référence contenant des informations de configuration de port d'antenne, et les informations de configuration de port d'antenne servant à indiquer une structure de ports d'antenne ;
recevoir, conformément aux informations de configuration de ressources de signal de référence, un signal de référence envoyé par une station de base ;
sélectionner une matrice de précodage dans un livre de codes d'après le signal de référence reçu, une structure de la matrice de précodage correspondant à la structure de ports d'antenne indiquée par les informations de configuration de port d'antenne ; et
rapporter un indicateur de matrice de précodage, PMI, à la station de base, le PMI servant à indiquer la matrice de précodage sélectionnée ;
dans lequel la structure de la matrice de précodage est **W** = **W₁W₂,** où ${W}_{1} = \left[\begin{matrix}X & 0 \\ 0 & X\end{matrix}\right] ,$ et **X** = **A** ⊗ **B** ; ⊗ désigne un produit de Kronecker ; A et B sont des matrices m × p et (n/2)×q respectivement, ou bien A et B sont des matrices (m/2) × p et n × q respectivement ; **W₂** est une matrice *(2pq)* × *r,* où p et q sont des entiers positifs, et r est un rang de la matrice de précodage, où m correspond à une quantité de lignes de la structure de ports d'antenne, et n correspond à une quantité de colonnes de la structure de ports d'antenne.

2. Procédé selon la revendication 1, dans lequel le PMI comprend un premier PMI servant à indiquer la matrice **W₁** et un deuxième PMI servant à indiquer la matrice **W₂;** dans lequel l'action de rapporter un indicateur de matrice de précodage, PMI, à la station de base consiste à :
rapporter séparément le premier PMI et le deuxième PMI à la station de base.

3. Procédé pour recevoir des informations d'état de canal, comprenant les étapes consistant à :
envoyer un signal de référence à un équipement d'utilisateur, l'équipement d'utilisateur recevant le signal de référence d'après des informations de configuration de ressources de signal de référence préalablement acquises, les informations de configuration de ressources de signal de référence contenant des informations de configuration de port d'antenne, et les informations de configuration de port d'antenne servant à indiquer une structure de ports d'antenne ; et
recevoir un indicateur de matrice de précodage, PMI, rapporté par l'équipement d'utilisateur, le PMI servant à indiquer une matrice de précodage sélectionnée par l'équipement d'utilisateur, la matrice de précodage étant sélectionnée par l'équipement d'utilisateur dans un livre de codes d'après le signal de référence, une structure de la matrice de précodage correspondant à la structure de ports d'antenne indiquée par les informations de configuration de port d'antenne ;
dans lequel la structure de la matrice de précodage est **W** = **W₁W₂,** où ${W}_{1} = \left[\begin{matrix}X & 0 \\ 0 & X\end{matrix}\right] ,$ et **X** = **A** ⊗ **B** ; ⊗ désigne un produit de Kronecker ; A et B sont des matrices m × p et (n/2) × q respectivement, ou bien A et B sont des matrices (m/2) × p et n × q respectivement ; **W₂** est une matrice (2*pq*) × *r,* où p et q sont des entiers positifs, et r est un rang de la matrice de précodage, où m correspond à une quantité de lignes de la structure de ports d'antenne, et n correspond à une quantité de colonnes de la structure de ports d'antenne.

4. Procédé selon la revendication 3, dans lequel le PMI comprend un premier PMI servant à indiquer la matrice **W₁** et un deuxième PMI servant à indiquer la matrice **W₂;** dans lequel
la réception d'un indicateur de matrice de précodage, PMI, rapporté par l'équipement d'utilisateur consiste à :
recevoir séparément le premier PMI et le deuxième PMI qui sont rapportés par l'équipement d'utilisateur.

5. Équipement d'utilisateur, comprenant :
un module d'acquisition (41), configuré pour acquérir des informations de configuration de ressources de signal de référence, les informations de configuration de ressources de signal de référence contenant des informations de configuration de port d'antenne, et les informations de configuration de port d'antenne servant à indiquer une structure de ports d'antenne ;
un module de réception (42), configuré pour recevoir, conformément aux informations de configuration de ressources de signal de référence acquises par le module d'acquisition, un signal de référence envoyé par une station de base ;
un module de sélection (43), configuré pour sélectionner une matrice de précodage dans un livre de codes d'après le signal de référence reçu par le module de réception, une structure de la matrice de précodage correspondant à la structure de ports d'antenne indiquée par les informations de configuration de port d'antenne ; et
un module d'envoi (44), configuré pour rapporter un indicateur de matrice de précodage, PMI, à la station de base, le PMI servant à indiquer la matrice de précodage sélectionnée par le module de sélection ;
dans lequel la structure de la matrice de précodage est W **= W₁W₂,** où ${W}_{1} = \left[\begin{matrix}X & 0 \\ 0 & X\end{matrix}\right] ,$ et **X = A** ⊗ **B** ; ⊗ désigne un produit de Kronecker ; A et B sont des matrices m × p et (n/2) × q respectivement, ou bien A et B sont des matrices (m/2) × p et n × q respectivement ; **W₂** est une matrice (2*pq*) × *r,* où p et q sont des entiers positifs, et r est un rang de la matrice de précodage, où m correspond à une quantité de lignes de la structure de ports d'antenne, et n correspond à une quantité de colonnes de la structure de ports d'antenne.

6. Équipement d'utilisateur selon la revendication 5, dans lequel le PMI comprend un premier PMI servant à indiquer la matrice **W₁** et un deuxième PMI servant à indiquer la matrice **W₂** ; dans lequel
le module d'envoi est spécifiquement configuré pour rapporter séparément le premier PMI et le deuxième PMI à la station de base.

7. Station de base, comprenant :
un module d'envoi (61), configuré pour envoyer un signal de référence à un équipement d'utilisateur, l'équipement d'utilisateur recevant le signal de référence d'après des informations de configuration de ressources de signal de référence préalablement acquises, les informations de configuration de ressources de signal de référence contenant des informations de configuration de port d'antenne, et les informations de configuration de port d'antenne servant à indiquer une structure de ports d'antenne ; et
un module de réception (62), configuré pour recevoir un indicateur de matrice de précodage, PMI, rapporté par l'équipement d'utilisateur, le PMI servant à indiquer une matrice de précodage sélectionnée par l'équipement d'utilisateur, la matrice de précodage étant sélectionnée par l'équipement d'utilisateur dans un livre de codes d'après le signal de référence, une structure de la matrice de précodage correspondant à la structure de ports d'antenne indiquée par les informations de configuration de port d'antenne ;
dans lequel la structure de la matrice de précodage est **W = W₁W₂,** où ${W}_{1} = \left[\begin{matrix}X & 0 \\ 0 & X\end{matrix}\right] ,$ et **X = A** ⊗ **B** ; ⊗ désigne un produit de Kronecker ; A et B sont des matrices m × p et (n/2) × q respectivement, ou bien A et B sont des matrices (m/2) × p et n × q respectivement ; **W₂** est une matrice *(2pq)* × *r,* où p et q sont des entiers positifs, et r est un rang de la matrice de précodage, où m correspond à une quantité de lignes de la structure de ports d'antenne, et n correspond à une quantité de colonnes de la structure de ports d'antenne.

8. Station de base selon la revendication 7, dans laquelle le PMI comprend un premier PMI servant à indiquer la matrice **W₁** et un deuxième PMI servant à indiquer la matrice **W₂** ; dans laquelle
le module de réception est spécifiquement configuré pour recevoir séparément le premier PMI et le deuxième PMI qui sont rapportés par l'équipement d'utilisateur.
